# EUROPEAN PATENT SPECIFICATION

(11) **EP 0 835 850 B1**
(45) Date of publication and mention of the grant of the patent: **21.06.2006**
(21) Application number: 97117018.8
(22) Date of filing: 01.10.1997
(51) Int. Cl.: C03C 17/00, B44D 5/10, B24C 1/00, B24C 1/06, C03C 17/34, C03C 17/42

(54) **Method for surface processing a glass plate and processed glass plate obtained thereby**
Verfahren zur Bearbeitung der Oberfläche einer Glasplatte und nach diesem Verfahren hergestellte Glasplatte
Procédé de traitement de surface d'une plaque de verre et plaque de verre obtenue selon ledit procédé

(30) Priority: 08.10.1996 IT MI962084
(43) Date of publication of application: 15.04.1998
(73) Proprietor: Axivetro S.a.S. di Martelli Giuliano E C., 22063 Cantu' (Como) (IT)
(72) Inventor: Martelli, Giuliano, AXIVETRO S.A.S., 22063 Cantu' (COMO) (IT)
(74) Representative: Cicogna, Franco

(56) References cited:
- WO-A-95/15267
- WO-A-96/07551
- CA-A- 1 133 770
- GB-A- 2 289 021
- US-A- 4 053 076
- US-A- 4 952 462
- US-A- 5 492 951
- DATABASE WPI Section PQ, Week 9545 Derwent Publications Ltd., London, GB; Class P74, AN 95-345166 XP002083149 & CN 1 095 018 A (LIANGJIAO XIEHE GLASS HANDICRAFT FACTORY), 16 November 1994

## Description

### BACKGROUND OF THE INVENTION

The present invention relates to a method for surface processing a glass plate and the like.

The invention further relates to the product made by the inventive method, which product constitutes an integrating part of the invention.

A prior method for applying on a surface of a glass plate an ornamental pattern provides to apply, on a surface of said glass plate, a plastic material layer, thereon an ornamental pattern is successively printed.

Such a support, however, can be easily damaged, since the plastic material layer does not assure a firm adhesion to the glass plate, thereby, as the coated glass plate is subjected to rubbing or abrading forces, the plastic material layer is inevitably removed from said glass plate.

In order to overcome the above mentioned drawback, the ornamental pattern has been, according to a known prior method, coated by a protective film: however, this solution does not provide a strong adhesion of the ornamental pattern since this ornamental pattern can be easily abraded from the supporting glass plate notwithstanding the provision of the mentioned protective film.

### SUMMARY OF THE INVENTION

Accordingly, the aim of the present invention is to overcome the above mentioned drawbacks, by providing a method for surface processing a glass plate and the like, which allows to firmly apply, on a surface of said glass plate, an ornamental pattern which can not be easily removed and which can be held in a practically unaltered condition in the time.

Within the scope of the above mentioned aim, a main object of the present invention is to provide such a method which comprises very simple processing steps which can be easily successively carried out even by unskilled operators.

Another object of the present invention is to provide such a method which is very reliable and safe in operation.

Yet another object of the present invention is to provide a method for surface processing a glass plate and the like, which allows to provide the glass plate with any type of desired surface ornamental pattern.

According to one aspect of the present invention, the above mentioned aim and objects, as well as yet other objects, which will become more apparent hereinafter, are achieved by a method for surface processing a glass plate comprising the steps of sandblasting at least a surface of said glass plate, in order to make said glass plate surface uneven and porous, applying, on said sandblasted glass plate surface, a plastic material or paint layer, having gripping. properties, and further applying by a hot transfer printing process on said plastic material or paint layer an ornamental pattern, said ornamental pattern penetrating at least partially said gripping plastic material or paint layer.

### BRIEF DESCRIPTION OF THE DRAWINGS

Further characteristics and advantages of the present invention will become more apparent hereinafter from the following detailed disclosure of a preferred, though not exclusive, embodiment of a method for surface processing a glass plate and the like, which is illustrated, by way of an indicative, but not limitative, example, in the figures of the accompanying drawings, where:
Figure 1 is a schematic perspective view illustrating a glass plate;
Figure 2 illustrates a sanding step performed on a surface of the mentioned glass plate;

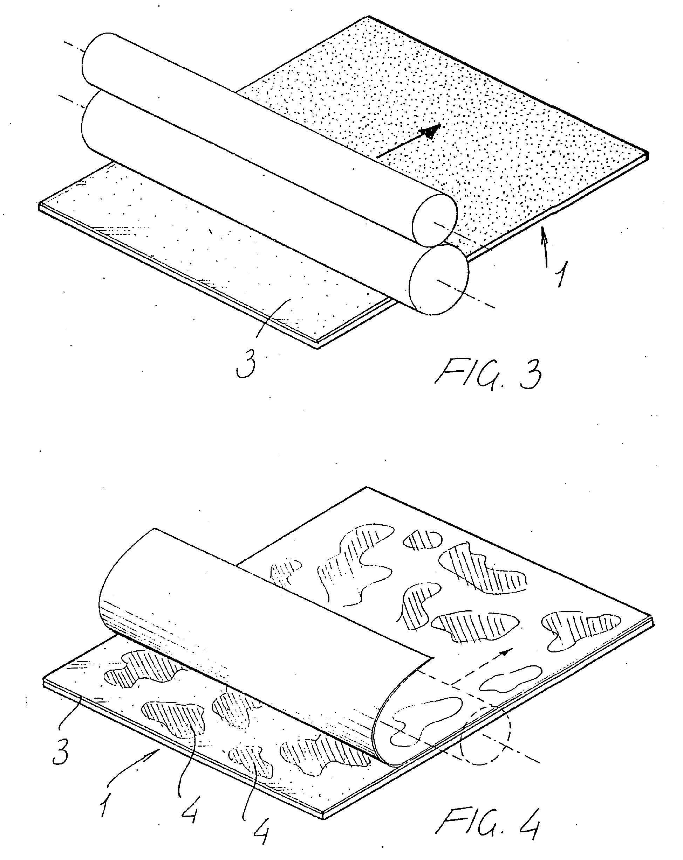

Figure 3 illustrates a further step of the subject method in which on the sandblasted surface of said glass plate is applied a gripping plastic material or paint layer;

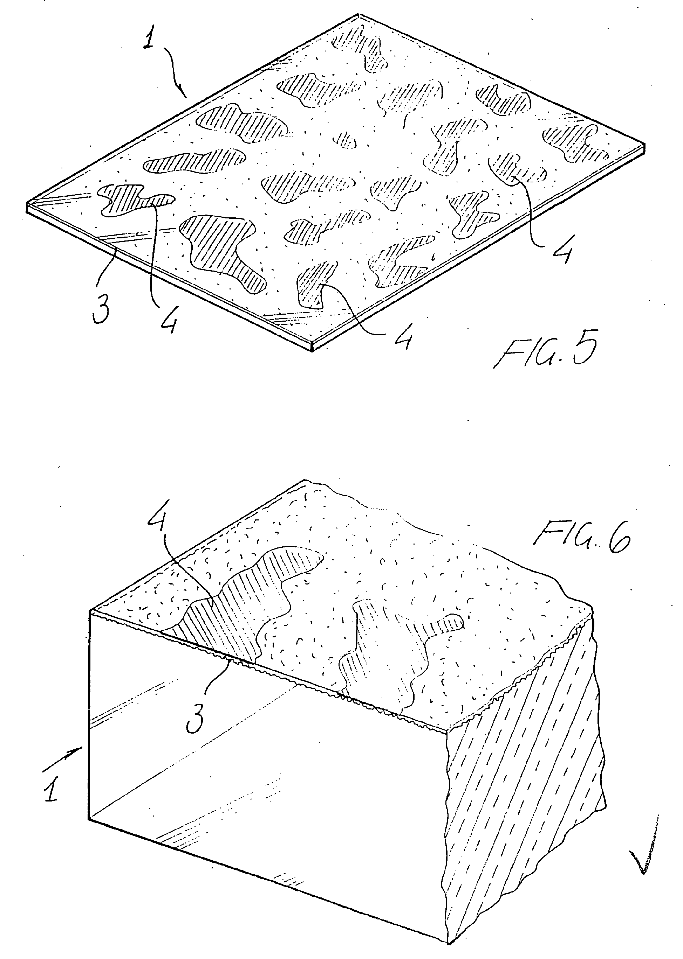

Figure 4 illustrates a further step of the subject method, in which on the sandblasted surface of said glass plate is transfer applied an ornamental pattern;
Figure 5 is a perspective view illustrating the glass plate made by the above mentioned mentioned steps;
   and
Figure 6 is a schematic cross sectional view illustrating, on a greatly enlarged scale, the glass plate at the end of the method according to the present invention.

### DESCRIPTION OF THE PREFERRED EMBODIMENT

With reference to the number references of the above mentioned figures, the method for surface processing a glass plate and the like, according to the present invention, comprises the step of providing a flat glass plate, indicated by the reference number 1, which is provided with a surface, either plain or knurled, thereon an ornamental pattern must be applied.

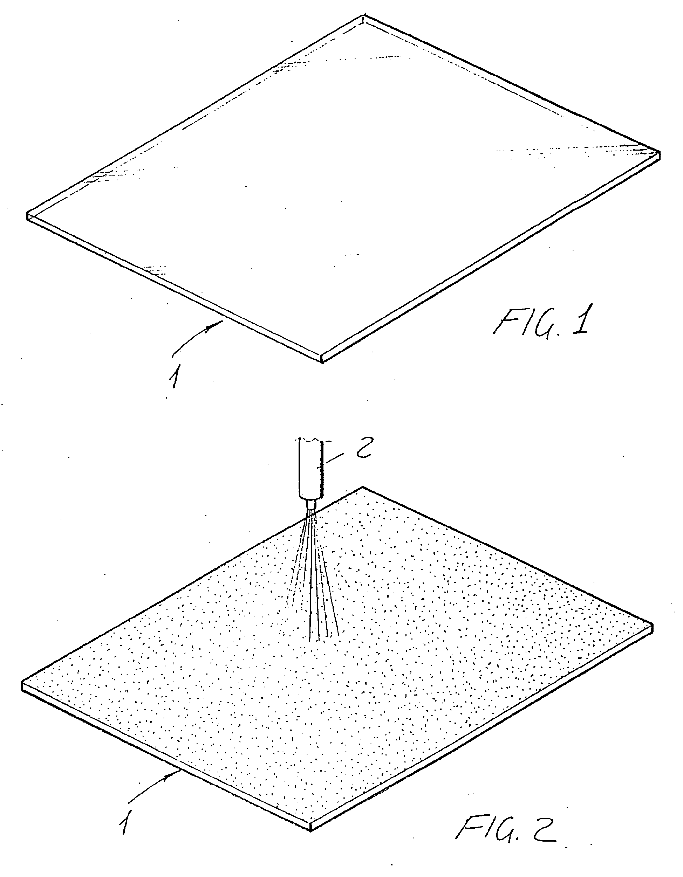

A main feature of the method according to the invention is that on the mentioned glass plate a sandblasting step is performed, as schematically shown in Figure 2 by using a sandblasting nozzle 2 provided for spraying on a surface of said glass plate a sand material, preferably a corundum sand material.

This sandblasting step, in particular, is carried out for making uneven said surface of said glass plate 1, thereby providing a porous surface which can be considered analogous to a ground surface.

Then, on said sandblasted surface a plastic material or paint layer 3 is applied, said layer including preferably a polyurethane resin having suitable gripping or adhering properties, which will penetrate the pores of the mentioned sandblasted surface of said glass plate 1, so as to be perfectly clamped on said glass plate surface.

After having applied the mentioned layer 3, on the thus processed surface an ornamental pattern 4 is further applied, by a hot transfer method, said decorating pattern penetrating at least partially the plastic material or paint layer, so as to be firmly and perfectly clamped to said plastic or paint layer.

The ornamental pattern, i.e. the colours of the pattern to be transferred on the sandblasted glass surface, will penetrate the gripping plastic material or paint, preferably a polyurethane plastic material, which, in turn, will be perfectly clamped to the glass plate, owing to the above mentioned penetration into the pores of the sandblasted glass surface.

If desired, it would be also possible to further apply a protective clear film, for example a film made of a plastic material or resin or a polyurethane paint, even if this film is not strictly necessary for providing a great strength to the finished product.

The ornamental patterns which can be applied can be of any desired types, for example of fancy types, or they can reproduce natural materials such as marbles, granites or the like, or they can reproduce veneers of natural wood or of any other desired types.

From the above disclosure it should be apparent that the invention fully achieves the intended aim and objects.

In particular, the fact is to be pointed out that a processing method has been provided allowing to firmly connect a plastic or paint layer to a glass plate, with a further firm application, by a transfer printing process, of an ornamental pattern which will intimately penetrate the gripping paint layer thereby providing a patterned glass plate the ornamental pattern of which can not be abraded away and which, accordingly, will be practically unalterable.

## Claims

1. A method for surface processing a glass plate comprising the steps of sandblasting at least a surface of said glass plate, in order to make said glass plate surface uneven and porous, applying, on said sandblasted glass plate surface, a plastic material or paint layer, having gripping properties, and further applying by a hot transfer printing process, on said plastic material or paint layer an ornamental pattern, said ornamental pattern penetrating at least partially said gripping plastic material or paint layer.

2. A method, according to claim 1, **characterized in that** said plastic material or paint layer comprises a polyurethane resin layer.

3. A method, according to claim 1, **characterized in that** said method comprises a further step of applying a plastic material or paint or resin protective clear film, preferably of polyurethane film, on said ornamental pattern.

4. A method, according to claim 1, **characterized in that** said ornamental pattern is of a fancy nature, or of a type reproducing natural materials such as marbles, granites, and natural wood veneers.

## Patentansprüche

1. Verfahren zur Bearbeitung der Oberfläche einer Glasplatte, umfassend die Schritte: Sandstrahlblasen mindestens einer Oberfläche der Glasplatte, um die Glasplattenoberfläche uneben und porös zu machen, Aufbringen einer Kunststoffmaterial- oder Lackschicht mit greifenden Eigenschaften auf die sandstrahlgeblasene Glasplattenoberfläche und ferner Aufbringen eines dekorativen Musters auf die Kunststoffmaterial- oder Lackschicht durch ein Heißübertragungs-Lackierverfahren, wobei das dekorative Muster mindestens teilweise in die greifende Kunststoffmaterial- oder Lackschicht eindringt.

2. Verfahren nach Anspruch 1, **dadurch gekennzeichnet, dass** die Kunststoffmaterial- oder Lackschicht eine Polyurethanharzschicht umfasst.

3. Verfahren nach Anspruch 1, **dadurch gekennzeichnet, dass** das Verfahren ferner den Schritt des Aufbringens einer Kunststoffmaterial- oder Lack- oder Harzschutzfolie, vorzugsweise einer Polyurethanfolie auf das dekorative Muster umfasst.

4. Verfahren nach Anspruch 1, **dadurch gekennzeichnet, dass** das dekorative Muster ansprechend oder einer Art ist, die natürliche Materialien wie Marmor, Granit und Naturholzfurniere reproduziert.

## Revendications

1. Procédé permettant de traiter la surface d'une plaque de verre comprenant les étapes de sablage d'au moins une surface de ladite plaque de verre, afin de rendre ladite plaque de verre inégale et poreuse, en appliquant, sur ladite surface de plaque de verre sablée, une matière plastique ou une couche de peinture, possédant des propriétés d'adhérence, et en appliquant également, grâce à un procédé d'impression de transfert à chaud, sur ladite matière plastique ou sur ladite couche de peinture un motif ornemental, ledit motif ornemental pénétrant au moins partiellement ladite matière plastique ou ladite couche de peinture adhérentes.

2. Procédé, selon la revendication 1, **caractérisé en ce que** ladite matière plastique ou ladite couche de peinture comprend une couche de résine de polyuréthane.

3. Procédé, selon la revendication 1, **caractérisé en ce que** ledit procédé comprend une étape supplémentaire consistant à appliquer une matière plastique ou une peinture ou un film transparent de protection en résine, de préférence un film de protection en polyuréthane, sur ledit motif ornemental.

4. Procédé, selon la revendication 1, **caractérisé en ce que** ledit motif ornemental est un motif fantaisie, ou reproduit des matières naturelles telles que des marbres, des granites et des placages de bois naturels.
